# EUROPEAN PATENT APPLICATION

(11) **EP 4 725 285 A1**
(43) Date of publication of application: **15.04.2026**
(21) Application number: 24206166.1
(22) Date of filing: 11.10.2024
(51) Int. Cl.: A01D 34/00, A01M 21/02

(54) **A ROBOTIC LAWN MOWER DEVICE FOR WEED REMOVAL**

(71) Applicant: My Green Keeper ApS, 2900 Hellerup (DK)
(72) Inventor: Pigonska Haagendrup, Charlie, 4040 Jyllinge (DK); Alex, Chandykunju, 2400 København NV (DK); Frisch, Jacob, 2100 København Ø (DK); Bøgeskov Hansen, Casper, 2640 Hedehusene (DK)
(74) Representative: Høiberg P/S

(57) **Abstract**

The present disclosure relates to a device for prohibiting spreading of unwanted plants in a lawn while mowing the grass of the lawn. In particular, it relates to a device which detects and identifies preselected plant species, in particular weed, and at least partly destructs the detected preselected plant species to improve a lawn by preventing at least growth of the preselected plants. One embodiment relates to a robotic lawn mower device for weed removal, the device comprising a body; a grass cutting unit arranged on the body for mowing a lawn; an imaging unit arranged on the body for acquiring images of plants in the lawn; at least one wheel arranged in connection with the body, the at least one wheel configured for moving the device on the lawn; and a root cutter unit configured to control an unwanted plant by at least partly destructing the unwanted plant.

## Description

The present disclosure relates to a device for prohibiting spreading of unwanted plants in a lawn while mowing the grass of the lawn. In particular, it relates to a device which detects and identifies preselected plant species, in particular weed, and at least partly destructs the detected preselected plant species to improve a lawn by preventing at least growth of the preselected plants.

### Background

A healthy lawn is by most people considered a green area primarily consisting of grass. However, managing a lawn in order to keep it healthy and beautiful requires weekly and in some cases daily operations, such as watering, cutting, fertilizing and weeds controlling. Operations that typically are time consuming. Whereas watering, cutting and fertilizing operations are directed to the control and growth of the grass, weeds controlling is directed to unwanted plant species present in the garden and in particular in the lawn.

Controlling weeds in a lawn is important, as weeds affect grass growth by decreasing the efficiency of irrigation, the availability of nutrients in the soil and the availability of light. The problem with weeds is typically solved by using different herbicides and gardening tools, in which the weed is destructed and/or removed. However, using herbicides is becoming less popular, due to the risk of environmental hazards. Further, gardening often requires substantial force, can be difficult and typically results in an overall poor weeding of the lawn, due to manually procedures and damage to plant species not categorized as unwanted plant species.

It is an object of the present disclosure to provide a device for controlling preselected plants, with which it is easier to maintain a healthy lawn than with known solutions.

It is another object of the present disclosure to provide a device for controlling preselected plants, with which the maintenance of a lawn with respect to weed control can be carried out at least semi autonomously.

It is another object of the present disclosure to provide a device for controlling plants, with which a more precise destruction of preselected plants is provided.

In particular, it may be seen as an object of the present disclosure to provide a device that solves the above-mentioned problems of the prior art.

### Summary

Thus, the above-described objects and several other objects are intended to be obtained in a first aspect of the invention by providing a robotic lawn mower device for weed removal, comprising
- a body;
- a sensor, preferably an imaging unit, arranged on the body, for imaging an area of the lawn adjacent the robotic lawn mower device,
- at least one wheel arranged in connection with the body for moving the device on the lawn;
- optionally a processor arranged on the body, for receiving, and optionally processing, images from the imaging unit,
- a grass-cutting unit, preferably configured to cut grass at one or more predefined lengths, and
- a root cutter unit configured to control, such as at least partly destruct, predefined plant species when activated.

The present disclosure provides an advantageous solution to the problem of treating lawns, as the presently disclosed device combines the function of a lawn mower with the function of removing unwanted plants from an area. As the robotic lawn mower device already continuously operates in the lawn to cut the grass, the imaging unit can continuously collect data of the surroundings, and this data can be analyzed by the processor. The processor may then transmit a signal to the root cutter unit to remove an unwanted plant that is detected. The device may then stop moving, and the root cutter unit may engage the surface and at least partially destroy the root of the unwanted plant. After that operation, the root cutter can be retracted from the surface and the device may continue navigating across the area, continuing its lawn mower operation and removing any additional unwanted plants that are detected.

One of the advantages of the presently disclosed device is the combination of the two processes of lawn mowing and removal of unwanted plants, which minimizes costs and reduces the need of using human labour to maintain a healthy lawn. For example, instead of using a gardener to remove any unwanted plants, a user can employ the presently disclosed device to maintain a lawn healthy and at a fine state. In addition, the presently disclosed device can aid in further automating the maintenance of a lawn, which can be a tedious and repetitive process.

The robotic lawn mower device is preferably configured to process images from the imaging unit to detect and/or identify unwanted plants in the lawn, preferably also to determine a position of the detected plant. Processing of the images can be provided locally in the robotic lawn mower device, e.g. by a processor, in the cloud and/or by means of an external processor in a remote device, such as a smartphone or general purpose computer, in communication with the robotic lawn mower device. Once unwanted plants have been detected and identified, the root cutter unit can at least partly destruct the unwanted plants, as described below here. This can be provided before, during and/or after lawn mowing by the presently disclosed device.

The device may be configured such that the root cutter unit is adapted for being arranged in a vertical axis above the determined position of the identified unwanted plant by use of the least one wheel, and wherein the root cutter unit is configured for performing a vertical movement in at least one direction, preferably followed by a rotational movement, the vertical and preferably the rotational movement, resulting in at least partly destructing the identified preselected plant species. Notable is that at least part of the root of the unwanted plant can be destroyed by the root cutter unit.

The device is intended for controlling preselected plants, preferably preselected weeds, in a lawn and the device is dimensioned accordingly. The device makes it possible to prevent growth of preselected plants in the lawn, as the device is moving around on the lawn to detect preselected plants and eradicate the detected plant. Further, the device is intended for providing an efficient gardening without human intervention.

As a further advantage the presently disclosed device may be configured to operate on tiled surfaces as well. Many gardens and lawns have areas with tiles, e.g. concrete tiles, and unwanted plants may grow in the separation between tiles. The presently disclosed device may be configured to identify plants in these separation areas, as the root cutter unit may be configured to access these small clearances between tiles, or at least just the upper opening of such a clearance. And identifying plants between tiles may be easier, because a plant growing in the separation between tiles is almost by definition unwanted.

The expression "control" and inflections thereof is to be understood as generally covering all actions for preventing, fighting or regulating an object. By "controlling plants" is meant an action that will affect the growth of the plant, the destruction of the plant and other actions that will change the plant's current state. Destruction of a plant may preferably provide a killing of the plant. In some embodiments, the destruction of a plant may not provide a direct killing of the plant, but is an indirect consequence of destroying the plant at least partly as the plant no longer has sufficient biological capabilities to maintain growth. Preferably, the destructed plant is not removed from the ground, such as the lawn, although in other preferred embodiments, the destructed plant is removed.

The presently disclosed lawn mower device is particularly, but not exclusively, advantageous for obtaining a device that based on a plant representation can provide a precise destruction of the identified preselected plant species, in order to avoid damaging the lawn around the identified preselected plant species.

One purpose of the present disclosure is to enable a robotic lawn mower to simultaneously treat the grass in a lawn and to destroy or remove any unwanted plants in the lawn. Additionally, the present disclosure relates to the use of an imaging unit, such as a camera, which can be coupled to the functions of a grass-cutting unit and of root cutter unit that removes any unwanted plants. As a result, it is possible to use the imaging unit to provide visual data to the grass-cutting unit and to the root cutter unit in order to improve their efficiency and accuracy. For example, if an area does not have any grass, then the grass-cutting unit may cease functioning temporarily, while if a type of unwanted plant is recognised, the root cutter unit can be activated.

Hence, a device for controlling plants in a lawn as well as performing lawn mowing operations is advantageous, as such a device can significantly automate most of the maintenance required in lawns, thereby reducing the human labor required. Additionally, a more efficient device for controlling preselected plants with a more precise destruction of the preselected plant would be advantageous.

### Description of Drawings

Various embodiments are described hereinafter with reference to the drawings. The drawings are examples of embodiments and are intended to illustrate some of the features of the presently disclosed robotic lawn mower for controlling plants and are not limiting to the presently disclosed system and method.
Figure 1 illustrates one embodiment of a robotic lawn mower device for controlling plants according to the present invention.
Figure 2 illustrates in a front view a robotic lawn mower device with a root cutter unit in an upper position according to the present invention.
Figure 3 illustrates in a front view a robotic lawn mower device with a root cutter unit in a lower position according to the present invention.
Figure 4 illustrates a robotic lawn mower device with processor according to the present invention.
Figure 5 illustrates a root cutter unit according to the present invention.

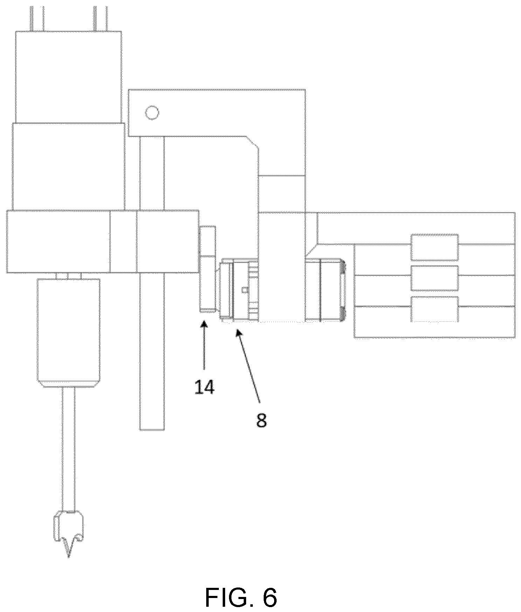

Figure 6 illustrates in a side-view a root cutter unit according to the present invention.
Figure 7 is a flowchart of a method for a device controlling targeted plants in a lawn according to the present invention.
Figure 8 shows an illustration of a root cutter according to an embodiment of the robotic lawn mower device.

### Detailed description

A purpose of the present disclosure is to provide a low-cost, low-maintenance device that is capable of mowing a lawn while simultaneously removing/destroying potential unwanted plants in an area. Using such a device offers environmental benefits, by minimizing the need of using chemicals to remove unwanted plants. In addition, such a device reduces the need of manual labour in maintaining the state of a lawn. An imaging unit may be utilized in order to identify the surroundings of the device, such that any unwanted plants, objects, or animals. The synergy of the imaging unit with the functions of the device may increase the accuracy of removing unwanted plants and reduce the potential damage in areas of a lawn that are not meant to be modified.

Specifically, the present disclosure relates to a robotic lawn mower device for weed removal, the device comprising a body, an imaging unit arranged on the body, the imaging unit configured to detect a plant and to determine a position of the detected plant, and at least one wheel arranged in connection with the body, the at least one wheel configured for moving the device from one location to another. The robotic lawn mower device may further comprise a processor arranged on the body, the processor configured to identify preselected plant species based on a detected plant representation received from the imaging unit, a grass-cutting unit, preferably configured to cut grass at a specific length, and a root cutter unit, the root cutter unit configured to control the identified preselected plant species by at least partly destructing the identified preselected plant species when activated by the processor. The root cutter unit may be adapted for being arranged in a vertical axis above the determined position of the identified plant species by use of the least one wheel, and wherein the root cutter unit is configured for performing a vertical movement in at least one direction, preferably followed by a rotational movement, the vertical and preferably the rotational, resulting in at least partly destructing the identified preselected plant species.

In one embodiment of the invention, the root cutter unit adapted to destruct a preselected part of a root of the identified preselected plant species. The root cutter unit may be adapted to destruct a specific part of a root of the identified preselected plant species, to provide a destruction limiting the interference with the surrounding grass.

In one embodiment of the invention, the root cutter unit comprises a pointing element configured to destruct at least partly the identified preselected plant species.

A root cutter unit may comprise a pointing element, the pointing element being shaped to destruct at least partly an identified preselected plant species when the pointing element of the root cutter unit is arranged in the identified preselected plant species.

The pointing element may have a shape of a drill, such as a part being pointed and a part being in a shape of a mill cutter, such as a drill.

The robotic lawn mower device can be configured such that the root cutter unit comprises an actuator, the actuator configured to execute the vertical movement, thereby displacing the root cutter unit along a vertical axis by at least 5 cm, more preferably at least 10 cm. The use of the actuator can enable the device to focus on damaging the roots of a targeted plant, effectively destroying the plant. Such a process is beneficial, as it minimizes the interference of the device with the surrounding plants, and it also reduces the chances that the targeted plant can be regenerated, since the root has been destroyed. For example, the actuator can enable the root cutter unit to penetrate the ground by a certain depth, such as 5-10 cm, allowing the root cutter unit to reach the root of a targeted plant, and destroy the root.

In one embodiment of the invention, the root cutter unit is configured for performing horizontal movement along an axis being perpendicular to a longitudinal axis of the body.

A root cutter unit may be configured for performing horizontal movements along an axis being perpendicular to a longitudinal axis of a body of a device, to prevent positioning errors from wheels when the device is moving on a terrain, such as a rugged terrain, while positioning the root cutter unit in a vertical axis above the identified preselected plant species.

In one embodiment of the invention, the at least one wheel comprises a wheel contact surface and wherein a plurality of protrusions extends from the wheel contact surface, preferably the plurality of protrusions are made in the same material as the wheel contact surface. This is to improve traction of the device on a slippery surface.

In one embodiment presently disclosed lawn mower device further comprises a light source arranged on the device, the light source being configured to provide light at least in one direction, preferably the direction is the front direction of the device. A device may move in conditions with low visibility. Such as a dark day, such as a night, in which, a light source may be arranged on the device, to provide light for the imaging unit and/or the scanning element, in order to detect plants and obstacles. The light source may output electromagnetic waves.

In one embodiment of the invention, the imaging unit is tilted when arranged above the root cutter unit in a vertical axis or tilted so that the detected plant and the root cutter unit is simultaneously within a detection field of the imaging unit.

Moreover, the imaging unit may be arranged on the body by means of a movable holder. The movable holder may be any type of object having a distal end attached to the imaging unit, and a proximal end attached or secured to the body of the device.

In an embodiment, the movable holder may be configured to tilt in any spatial direction. Such a feature allows the device to be versatile and flexible, as the imaging unit may tilt towards various objects, thereby allowing the inspection of various plants in an area, or possible obstacles that may harm the device. In addition, the imaging unit may use the tilting function in order to accurately position the root cutter unit above a targeted plant, thereby increasing the accuracy of the device.

A imaging unit may comprise one or more conventional cameras, for example an RGB camera or RGBD camera. 2D imaging can be provided by a single camera. 3D imaging can be provided by two (stereo) cameras, and/or by a 2D camera in combination with a depth sensor, such as an infrared depth sensor.

The imaging unit may detect other objects than plants, such as metal objects, such as foreign objects unwanted on a lawn. An imaging unit may provide a plant representation, which can be sent to a processor. The plant representation is any type of signal providing a representation of the plant, such as an image, such as an electric signal. The imaging unit may collect the data and transmit the data to the processor of the device. The processor may use any kind of image recognition software in order to identify the data retrieved. For example, a large number of open source software is publicly available which can be used to conduct image recognition of plants, objects, animals or any other objects that may be present in a lawn or a yard. Such image recognition software can allow the device to identify what is detected by the imaging unit, and transmit information to the various components of the device to act accordingly, such as a motor controlling the wheels, the grass-cutting unit and the root cutter unit.

For example, related to plant recognition, image recognition may identify plant species by analyzing features such as leaf shape, color, texture, and size. By comparing these visual traits to a pre-trained dataset of plant images, the system may recognize specific plant types, differentiate between healthy and diseased plants, or even detect invasive species.

The image recognition may also be used for object detection. For objects, image recognition systems may detect and classify items based on their distinct characteristics such as contours, color, texture, and overall shape. Such a feature can be useful in various uses of the present disclosure, as different types of objects may be present in a lawn which would need to be avoided by the device to prevent any unnecessary damage.

Furthermore, image recognition may be used for animal detection during the operation of the device, with the purpose of avoiding harming any animal accidentally. Image recognition models trained on wildlife databases can identify animals by recognizing unique patterns like fur, skin markings, body shapes, and movement patterns. For example, the processor having received data from the imaging unit could detect pets, wildlife, such a hedgehogs, slugs, such as the unwanted Iberian slug, or even pests, distinguishing between species. Such features may enhance the environmental awareness of the device, enabling the device to adjust its operation based on the presence of certain plants or animals and avoid damaging them. Some unwanted animals could even be destructed by the root cutter unit, unwanted animals like the Iberian slug. Such a feature not only improves efficiency but also promotes sustainable and intelligent lawn care.

In one embodiment of the invention, the device further comprises a metal detector. A device may comprise a metal detector to prevent the device from moving across metal objects, such as cables, such as electric cables.

In one embodiment of the invention, the device comprises three wheels, wherein the processor is configured for operating at least two of the wheels independently of each other.

In one embodiment of the invention, the device further comprising support elements arranged in connection with the body and preferably in connection with the ground.

A device may comprise support elements, preferably arranged underneath the body. The support elements may abut the surface when a root cutter unit is at least partly destructing the identified preselected plant species in the ground. The support elements may provide increased support when the ground is hard and/or dry and/or rugged.

In one embodiment of the invention, the device comprising a scanning element, the scanning element configured to detect an obstacle arranged on/in the lawn, and based on the detected obstacle move the device around the obstacle.

A device may comprise a scanning element to detect an obstacle arranged on/in the lawn, preferably, the scanning element is arranged on the device above a root cutter unit. The scanning element may provide movement stability to the device, by preventing the device from being hit by obstacles on/in the lawn.

In one embodiment of the invention, the device comprising a wireless connection for communication with an external device. The wireless communication connection may provide data about the device while powered.

In one embodiment of the invention, the device further comprising a position element, such as a GPS, such as a GNSS, for example for accurate navigation on the lawn and in the garden.

In one embodiment of the invention, the device further comprising a battery, preferably the battery is a rechargeable battery.

The device may comprise a rechargeable battery, preferably the rechargeable battery can be charged at a charging station at a preselected location.

In one embodiment of the invention, the device further comprising a power management system, the power management system configured for managing the power available on a battery. The power management system may provide an output to the processor when the power available on the battery is below a preselected threshold, such as below 30% such as below 20%, such as below 10%, in order for the device to remove to a charging station or a preselected location.

In a second aspect, the invention further relates to a computer-implemented method for operating a device controlling targeted plants in a lawn, the method comprising:
A. providing a device for controlling targeted plants in a lawn, the device being configured for controlling targeted plants by at least partly destructing the targeted plant;
B. detecting a plant in the lawn using the device;
C. identify if the detected plant in the lawn is a targeted plant;
D. if the detected plant is a targeted plant, then
   - determining a targeted plant position, and preferably determining a current position of the device;
   - moving the device to the determined targeted plant position;
   - arranging the device in a preselected destruction position;
   - destructing at least partly the identified targeted plant using the device.

A "preselected destruction position" is to be understood as a position, in which, the device is able to destruct the identified targeted plant. The position may be regulated based on the targeted plant, the size of the device, the angle of the ground and the surface structure of the ground around the identified targeted plant.

In one embodiment of the invention, the step of destructing further comprising:
- performing a vertical movement by at least root cutter unit of the device in a direction towards the identified targeted, so that the root cutter unit is at least partly is arranged in the ground within the identified targeted plant;
- performing a rotational movement by the root cutter unit arranged at least partly in the ground, preferably to at least partly destruct root connections to the identified targeted plant;
- performing a vertical movement by the root cutter unit in a direction away from the at least partly destructed identified targeted plant, so that root cutter unit is arranged above the ground.

The first and second aspect of the present invention may each be combined with any of the other aspects. These and other aspects of the invention will be apparent from and elucidated with reference to the embodiments described hereinafter.

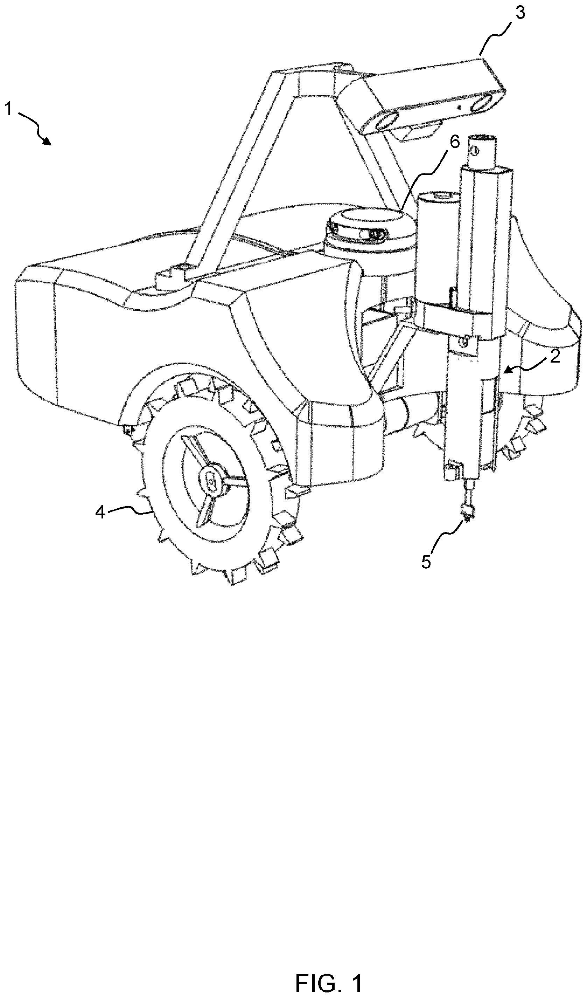

With reference to fig. 1, one aspect of the invention will now be detailed. In fig. 1 a device 1 for controlling plants is illustrated. The device 1 is typically arranged on a lawn comprising predominantly grass but the lawn may also comprise other types of plants. The device 1 is configured for controlling specific types of plants, preferably, where the specific types of plants is preselected before the device 1 is powered and arranged on the lawn. The device 1 comprises a root cutter unit 2 arranged in one end of the device 1, being the same end as an imaging unit 3. The root cutter unit 2 is comprises a pointing element 5 that is configured to destruct at least partly a detected plant. The shape of the pointing element 5 may depend on the targeted plant species, as individual plant species vary both in terms of size and in terms of root arrangement. The root cutter unit 2 is adapted so as to be able to control targeted plant species. The imaging unit 3 is arranged in tilted configuration, preferably, so that the area of detection, being the detection zone of the imaging unit, comprises at least a part of the root cutter unit. The width of the area of detection is preferably at least as wide as the width of the robot, to increase the chance of detecting targeted plant species.

The preselected or targeted plant species may be one of, but not limited to, crabgrass, purslane, lambsquarters, pigweed, chickweed, dandelion, shepherds purse, creeping Charlie, thistle, bindweed, nutsedge and buckhorn plantain.

In other embodiments, the detection zone does not comprise any part of the root cutter unit 2.

The imaging unit 3 arranged on the device is a camera, but may be any type of imaging unit capable of detecting objects. The imaging unit 3 is used to detect targeted plants, preferably, the targeted plants are different types of weed predominantly present in the lawn. The imaging unit may be coupled to a processor arranged on the device (not shown), that can identify if the detected plant is one of one or more types of preselected weeds. In an embodiment, the device may be equipped with a light source for low-light conditions, ensuring effective weed management even at night or on dark days. The design of the device for semi-autonomous operation can minimize the need for human intervention, making lawn maintenance easier and more efficient. In addition, the device may comprise object-detecting imaging units allowing the creation of a detection zone around the root cutter unit, thereby ensuring precise detection of targeted plants.

Moreover, the imaging unit may be arranged on the body by means of a movable holder. The movable holder may be any type of object having a distal end attached to the imaging unit, and a proximal end attached or secured to the body of the device.

In an embodiment, the movable holder may be configured to tilt in any spatial direction, thereby allowing the imaging unit to tilt. Tilting of the imaging unit can be beneficial in various circumstances, as tilting allows the imaging unit to adjust with relation to the root cutter unit, thereby increasing the accuracy of the process of root destruction. In addition, tilting of the imaging unit may enable the inspection of various plants in an area, or possible obstacles that may harm the device.

The device 1 further comprising two wheels 4 arranged in a distance from each other, to prevent the device 1 from toppling. The wheels comprise a wheel contact surface, where a plurality of protrusions extends from the wheel contact surface, which prevents the device 1 from slipping, when the ground is wet, rugged or when the ground comprises steep slopes. The plurality of protrusions are made in the same material as the wheel contact surface, but may in some embodiments be made from a different material that the wheel contact surface, such as made from a metallic material, such as made from a plastic material.

The device 1 further comprises a scanning element 6, the scanning element 6 being a light detection and ranging sensor, also known as a 3D laser scanning or remote sensing, LIDAR. The scanning element 6 is used to detect objects, which the device 1 should avoid. The objects are typically present on the lawn or defines the boundaries of the lawn, such as a hedge, such as a flag, such as a pot. The scanning element may be used complementary with the imaging unit in order to detect any type of objects in the surroundings of the device. The data collected by the scanning element may be transmitted to the processor of the device, enabling an image reconstruction of the data. Such reconstruction enables the device to avoid any objects or areas in the lawn.

Furthermore, the imaging unit may collect a variety of data from the surroundings of the device, with the purpose of processing such data to analyze the environment of the device and control the various components of the device successfully. Specifically, the device can be configured, such that the imaging unit collects data related to the condition of the lawn. The device may be configured, such that the imaging unit collects data related to the types of plants in the surroundings of the device. In an embodiment, the device may be configured such that the imaging unit collects data related to objects in the surroundings of the device. In addition, the device may be configured such that the imaging unit collects data related to animals in the surroundings of the device. The data collected by the imaging unit may be transmitted to the processor. The processor may then analyze the data and control the various parts of the device, such as to navigate the device in order to avoid any obstacles and control the grass-cutting unit if lawn is to be cut at a given position of the device. The data may also be used to identify the plant species in the surroundings of the device, and to control the root cutter unit in order to engage on the surface and remove an unwanted plant.

Moreover, the robotic lawn mower may be configured to synergistically operate the grass-cutting unit, the imaging unit and the root cutter unit, such that information detected by the imaging unit is utilized for the operation of the grass-cutting unit and of the root cutter unit. The synergetic operation may have various manifestations. For example, the imaging unit may detect the height of the grass in a particular area, and based on this data, the grass-cutting unit may automatically adjust its blade height to ensure optimal cutting efficiency. Simultaneously, data collected by the imaging unit may modify the operation of the root cutter unit, enabling the removal of unwanted plants when such plants are detected. The device may also modify the mower's speed or path to optimize the coverage of that specific area, thereby preventing redundant cutting or incomplete mowing. This synergy among the components can offer several advantages. The synergy enhances the efficiency of the mowing process and the plant removal process, reduces energy consumption by avoiding unnecessary operations, and minimizes wear on the various components of the device. Furthermore, the synergetic operation ensures a more consistent and high-quality lawn appearance by adapting to changing environmental conditions and terrain characteristics.

In other embodiments, a different scanning element 6 may be used, such as a radar, such as Al vision.

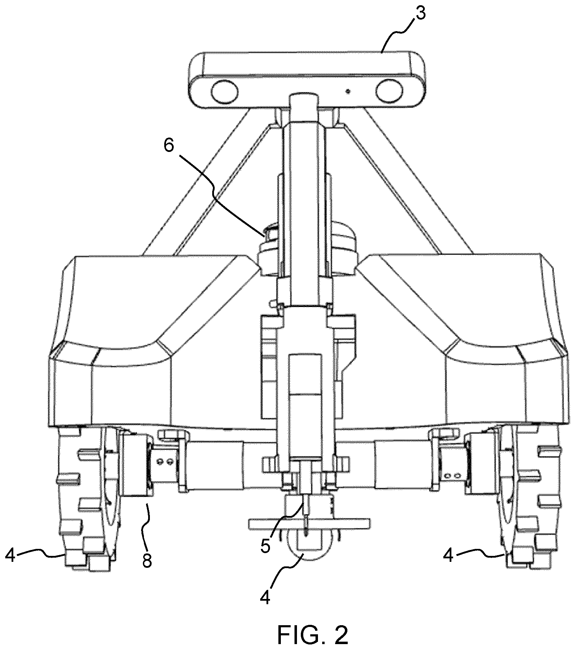

With reference to fig. 2, another embodiment of the invention is illustrated. Fig. 2 illustrates in a front view a device 1 for controlling plants in lawn. The device 1 comprises an imaging unit 3 and a scanning element 6 for both detecting targeted plants and identifying objects present around the device 1. In fig. 2, a root cutter unit 2 is illustrated in one configuration, being a configuration where the pointing element 5 is in an upper position. In an upper position, the pointing element 5 is arranged above the ground, so that the device 1 can move around on the lawn. Typically, the upper position will be a neutral position for the root cutter unit 2, when the root cutter unit 2 is not activated. The root cutter unit 2 is configured for performing vertical movements and a rotational movement at least in one direction. In some embodiments, the root cutter unit 2 is further configured for performing horizontal movements, for arranging the root cutter unit 2 above the identified preselected plant.

The device 1 comprises three wheels 4, one wheel 4 arranged on each side of the root cutter unit 2, and one wheel 4 arranged behind the root cutter unit 2. The wheel 4 arranged behind the root cutter unit2 is typically not powered by a motor, but used to stabilise the device 1. The wheel 4 arranged on each side of the root cutter unit is attached to a motor 8 arranged below a body 13 (not shown). The motors 8 are typically operating the wheels independently of each other, so that the device 1 can make precise manoeuvres, in order to both avoid obstacles, and in order to arrange the device 1 in a vertical axis above the identified preselected plant species, to at least partly destruct the identified preselected plant species.

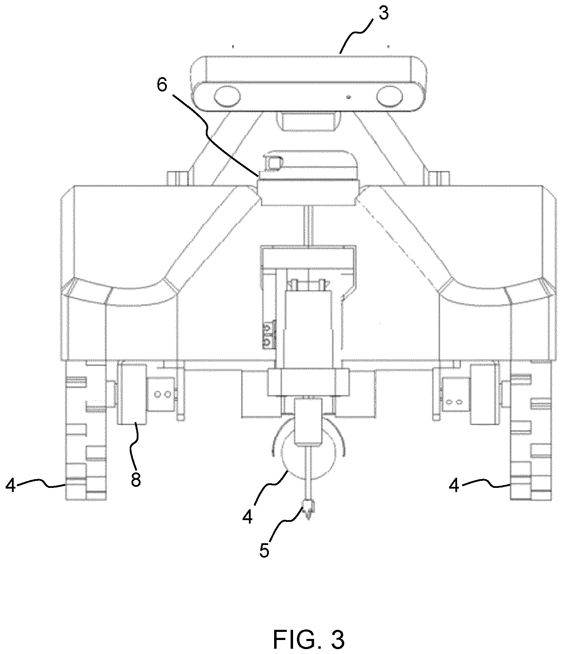

With reference to fig. 3, another embodiment of the invention is illustrated. Note that the device shown is fig. 3 has a different design compared to the device of figures 1, 2, as the root cutting unit comprises an actuator in the embodiment of fig. 3. Further details about the actuator are provided in the following sections of the present disclosure. Fig. 3 illustrates in a front view of a device similar to the device 1 shown in fig. 1 for controlling plants in a lawn, in which a root cutter unit 2 is in a second configuration, being a configuration where the pointing element 5 is in a lower position. In a lower position, the pointing element 5 is arranged at least partly within the ground, so that the root cutter unit 2 upon activation can control the identified preselected plant by use of the pointing element 5. The part of the pointing element 5 arranged in the ground is preferably arranged in or within the identified preselected plant, which is present in the ground in the lawn. The device may use the pointing element 5 in order to access the roots of plants below the ground surface. Then, the pointing element 5 may rotate continuously in order to partially or fully damage the roots of the plants, effectively destroying the targeted plant. Afterwards, the root cutting unit may be retracted from the ground, allowing the device to continue navigating the area.

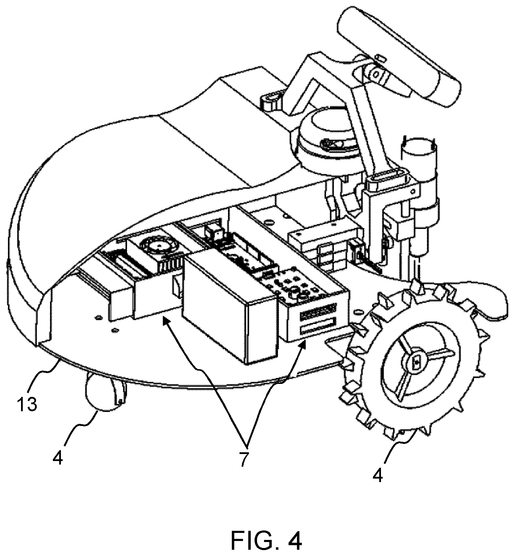

With reference to fig. 4, another embodiment of the invention is illustrated. Fig. 4 illustrates a device 1 for controlling plants in a lawn, comprising a computer comprising a processor arranged on the body 13 of the device. The processor is connected to the imaging unit 3, the scanning element 6, the wheels 4 and the root cutter unit 2. The processor is configured based on inputs from the imaging unit 3 and preferably the scanning element 6 for sending instructions to the wheels 4 and the root cutter unit 2 in order to move the device and to control preselected plants by the root cutter unit 2.

In some embodiments, the device 1 comprising a position element (not shown), such as a GPS, such as a GNSS, which is connected to the processor, so that the processor receive inputs from the position element, which is processed and results in output signals that are fed to the wheels 4, to navigate the device 1 in view of its current location. In further embodiments, the position of the boundaries of the lawn may be fed as input signals to the processor, so that the device 1 can stay on the lawn. The position element may be used in combination with the scanning element and/or with the imaging unit in order to optimize the position of the device and minimize the chances of navigating into an incorrect area.

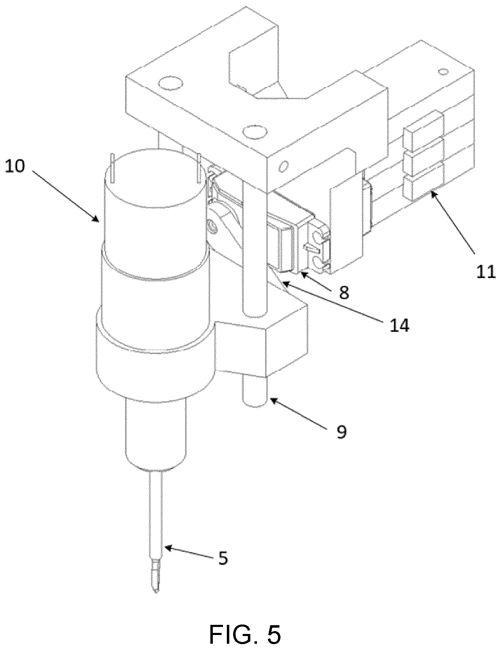

With reference to fig. 5, another embodiment of the invention is illustrated. Fig. 5 illustrates a root cutter unit 2 for a device 1 for controlling plants. The root cutter unit 2 comprising a connecting body, the connecting body attached to a preselected position on the device 1, preferably the preselected position on the device 1 is on the body 8 of the device 1, and more preferably, the preselected position is on the same side of the device 1, where the imaging unit 3 is arranged. The connecting body connected to two extending elements 9, the extending elements 9 extending in a vertical direction. The connecting body further attached to a motor 8, the motor 8 being attached via an arm 14 to a move element that extends vertically. The move element comprising a part attached to the extending elements 9 and the arm 14, the extending elements 9 and the arm 14 powered by the motor provides a vertical movement of the move element. The move element further comprising in one end, being the upper end, a head 10, and in the opposite end, being the lower end, a pointing element 5. The head 10 comprising a motor (not shown) for providing a rotational movement of the pointing element 5.

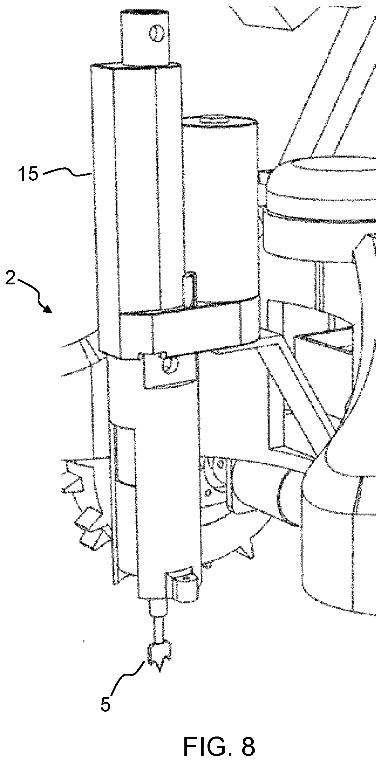

Figure 8 shows an additional embodiment of the root cutter unit 2. In this embodiment. the root cutter unit comprises an actuator 15, said actuator can be used to execute the vertical movement of the root cutter unit, thereby displacing the root cutter unit along the vertical axis. Depending on the type of plants that are to be removed, and the consistency of the soil, different types of actuators may be used. In an embodiment, the actuator can displace the root cutter unit along the vertical axis by at least 5 cm, more preferably at least 10 cm.

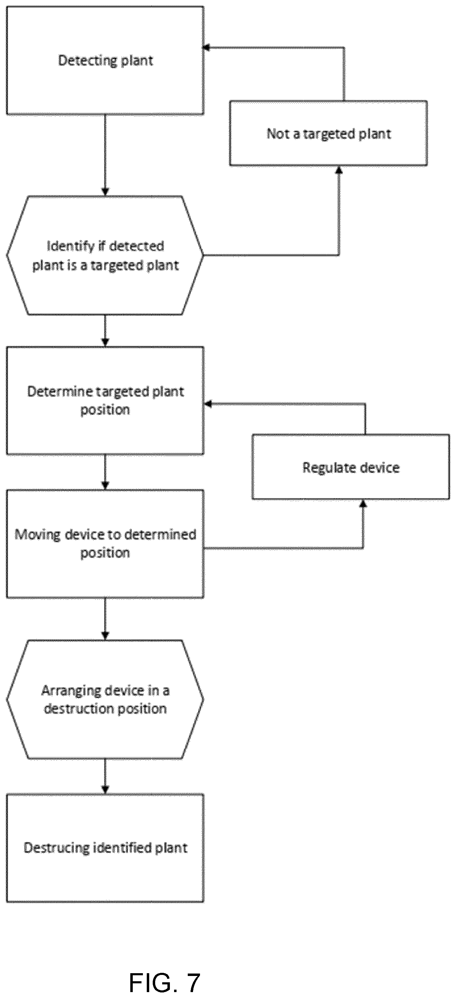

With reference to fig. 7 a second aspect of the invention will now be detailed. Fig. 7 illustrates a method for a device controlling targeted plants in a lawn. The device comprises a computer, the computer comprising a processor, communication capabilities and a memory. A method may be embodied as a program operable on the computer. As used herein, device, is to be understood, as a device comprising a computer with a processor, a memory and communication capabilities used to execute instructions, in order to communicate with the components in the device, such as an imaging unit, such as wheels, such as a root cutter unit. The computer is capable of translating different types of signals, such as pictures, such as electric signals, such as hydraulic signals. The memory on the computer may include data relating to targeted plants.

In an embodiment, the robotic lawn mower device can be configured, such that the root cutter unit comprises an actuator, the actuator configured to execute the vertical movement, thereby displacing the root cutter unit along the vertical axis by at least 5 cm, more preferably at least 10 cm. The embodiment in figs. 1 and 2 of the presently disclosed device comprise an actuator as part of the root cutter unit. The use of the actuator can enable the device to focus on damaging the roots of a weed, effectively destroying the plant. Such a process is beneficial, as it minimizes the interference of the device with the surrounding plants, and it also reduces the chances that the targeted plant can be regenerated, since the root has been destroyed. For example, the actuator can enable the root cutter unit to penetrate the ground by a certain depth, such as 10 cm, allowing the root cutter unit to reach the root of a targeted plant, and destroy the root.

Referring to fig. 7, the method comprises detecting a plant in the lawn. As the devices moves around the lawn avoiding obstacles, the device detects a plant being different from grass. The method further comprises identifying if the detected plant in the lawn is a targeted plant. Based on the targeted plants stored in the memory on the device, the device identifies if the plant is one of one or more targeted plants. If the detected plant is not a targeted plant, the device moves to a new position in order to detect a new plant. If the detected plant is a targeted plant, the method further comprises that the device determines a targeted plant position and a current position of the device. The positions may be relative positions or a geoposition, such as a geoposition using GPS, such as a geoposition using GNSS. Alternatively, the method comprises (not shown) that the device tracks the relative position of the identified targeted plant. With a position of the identified targeted plant, the method further comprises moving the device to the determined position of the identified targeted plant. Based on the determination operation carried out by the device in order to determine the identified targeted plant position, the device may analyse the reached position and regulate by re-determine the position of the identified targeted plant, if the device determines that the position of the device in relation to the real position of the identified targeted plant is above a preselected threshold. The real position of the identified targeted plant may be the new determined position of the identified targeted plant. As the device reach a position within the preselected threshold, the method further comprises arranging the device comprising the root cutter unit in a preselected destruction position. When the device identifies that the root cutter unit is in a preselected destruction position, the method further comprises destructing the identified targeted plant at least partly, such as destructing the growth point, such as destructing the roots.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

The presently disclosed device may be used in various use cases in combination with the main aims of the device, which are unwanted plants removal and lawn mowing. In an embodiment, the presently disclosed device can be used to provide obstacle avoidance. For example, using the imaging units and the scanning element installed in the device, it may be possible to steer the device to avoid obstacles such as various objects in a lawn, or animals, to avoid cutting them and/or avoid damaging the device.

In another embodiment, the device may assist in monitoring the health of plants, as the imaging unit may capture images of various plants to assess their health.

The device may also aid in pest detection, soil condition assessment, growth monitoring and in identifying invasive species.

### LIST OF REFERENCE SYMBOLS USED

1 device
2 root cutter unit
3 imaging unit
4 wheel
5 pointing element
6 scanning element
7 processor
8 motor
9 extending element
10 head
11 spacer
13 body
14 arm
15 actuator

### Further details

1. A robotic lawn mower device for weed removal, the device comprising
   - a body;
   - a grass cutting unit arranged on the body for mowing a lawn;
   - an imaging unit arranged on the body for acquiring images of plants in the lawn;
   - at least one wheel arranged in connection with the body, the at least one wheel configured for moving the device on the lawn; and
   - a root cutter unit configured to control an unwanted plant by at least partly destructing the unwanted plant.
2. The robotic lawn mower device according to item 1, wherein the device is configured for detecting and/or identifying an unwanted plant based on image data received from the imaging unit.
3. The robotic lawn mower device according to any one of the preceding items, wherein the device is configured for determining a position of the unwanted plant based on image data received from the imaging unit.
4. The robotic lawn mower device according to any one of the preceding items, wherein the device is configured and arranging the root cutter unit above the unwanted plant, such as in a vertical axis above the plant, preferably by use of the least one wheel.
5. The robotic lawn mower device according to any one of the preceding items, wherein the root cutter unit is configured for performing a vertical movement in at least one direction for at least partly destructing the unwanted plant.
6. The robotic lawn mower device according to any one of the preceding items, wherein the root cutter unit is configured for performing a vertical movement of at least 3 cm, preferably at least 5 cm, more preferably at least 8 cm, or even 10 cm, into the ground to at least partly destruct the unwanted plant.
7. The robotic lawn mower device according to any one of the preceding items, configured to identify preselected plant species based on image data received from the imaging unit, to determine whether a plant is unwanted.
8. The robotic lawn mower device according to any one of the preceding items, wherein the grass-cutting unit is configured to cut grass at at least one specific length.
9. The robotic lawn mower device according to any one of the preceding items, wherein the root cutter unit (2) is adapted to destruct a preselected part of a root of the unwanted plant.
10. The robotic lawn mower device according to any of the preceding items, wherein the root cutter unit (2) comprises a mechanical device comprising a pointing element (5) configured to at least partly destruct the unwanted plant.
11. The robotic lawn mower device according to any of the preceding items, wherein the root cutter unit (2) is further configured for performing horizontal movement along an axis being perpendicular to a longitudinal axis of the body (13).
12. The robotic lawn mower device according to any of the preceding items, wherein the imaging unit (3) is tilted and arranged above the root cutter unit (2) in a vertical axis or tilted so that the unwanted plant and the root cutter unit (2) is simultaneously within a detection field of the imaging unit.
13. The robotic lawn mower device according to any one of the preceding items, wherein the root cutter unit comprises an actuator, the actuator configured to execute the vertical movement, thereby a root cutting part of the root cutter unit along the vertical axis by at least 5 cm, more preferably at least 10 cm.
14. The robotic lawn mower device according to any one of the preceding items, wherein the imaging unit is arranged on the body by means of a movable holder.
15. The robotic lawn mower device according to item 14, wherein a distal end of the movable holder is attached to the imaging unit, and wherein the proximal end of the movable holder is attached to the body.
16. The robotic lawn mower device according to any one of the preceding items, wherein the movable holder is configured to tilt in any spatial direction.
17. The robotic lawn mower device according to any of the preceding items, further comprising support elements arranged in connection with the body for supporting the body on the ground / lawn.
18. The robotic lawn mower device according to any of the preceding items, further comprising a scanning element (6) on the body, such as on top of the body, detecting an obstacle arranged on/in the lawn, and based on the detected obstacle move the device (1) around the obstacle.
19. The robotic lawn mower device according to item 18, wherein the scanning element is a LIDAR.
20. The robotic lawn mower device according to any of the preceding items, further comprising a wireless connection for communication with an external device.
21. The robotic lawn mower device according to any of the preceding items, wherein the device (1) comprises three wheels (4), and wherein the device (7) is configured for operating at least two of the wheels (4) independently of each other.
22. The robotic lawn mower device according to any of the preceding items, wherein the imaging unit comprises at least one or at least two RGB cameras or RGBD cameras.
23. The robotic lawn mower device according to any one of the preceding items, wherein the imaging unit collects data related to the surroundings of the device.
24. The robotic lawn mower device according to any one of the preceding items, wherein the imaging unit collects data related to the condition of the lawn.
25. The robotic lawn mower device according to any one of the preceding items, wherein the imaging unit collects data related to the types of plants in the surroundings of the device.
26. The robotic lawn mower device according to any one of the preceding items, wherein the imaging unit collects data related to objects in the surroundings of the device.
27. The robotic lawn mower device according to any one of the preceding items, wherein the imaging unit collects data related to animals in the surroundings of the device.
28. The robotic lawn mower device according to any one of the preceding items, wherein the device is configured to synergistically operate the grass-cutting unit, the imaging unit and the root cutter unit, such that information detected by the imaging unit is utilized for the operation of the grass-cutting unit and of the root cutter unit.
29. The robotic lawn mower device according to any of the preceding items, further comprising a positioning element, such as a GPS, such as a GNSS, for navigating the device on the lawn.
30. The robotic lawn mower device according to any of the preceding items, wherein the at least one wheel (4) comprises a wheel contact surface and wherein a plurality of protrusions extend from the wheel contact surface, preferably the plurality of protrusions are made in the same material as the wheel contact surface.
31. The robotic lawn mower device according to any of the preceding items, configured to navigate on a tiled surface, such as concrete tiles, detect and/or identify unwanted plants present in tile separations and preferably control said unwanted plants by means of the root cutter unit.
32. The robotic lawn mower device according to any of the preceding items, comprising a processor arranged in the body for processing image data from the imaging unit, controlling the root cutter unit, navigating the device, and/or processing data from the scanning element.
33. The robotic lawn mower device according to any of the preceding items, configured to communicate with an external processing unit, such as a smartphone, cloud service or general purpose computer, for processing image data from the imaging unit, controlling the root cutter unit, navigating the device, and/or processing data from the scanning element.
34. A computer implemented method for operating a robotic lawn mower device, the method comprising
   - providing a robotic lawn mower device, the device being configured for controlling unwanted plants by at least partly destructing the unwanted plant;
   - detecting a plant in the lawn using the device;
   - identify if the detected plant in the lawn is an unwanted plant;
   - if the detected plant is a unwanted plant, then
   - determining a plant position, and preferably determining a current position of the device;
   - moving the device to the determined plant position;
   - arranging the device in a preselected destruction position;
   - destructing at least partly the unwanted plant using the device.
35. The computer implemented method according to item 34, wherein the step of destructing further comprising:
   - performing a vertical movement by at least a root cutter unit of the device in a direction, preferably a vertical direction, towards the unwanted plant, so that the root cutter unit of the device at least partly is arranged in the ground within the identified unwanted plant;
   - performing a rotational movement by the root cutter unit arranged at least partly in the ground, preferably to at least partly destruct root connections to the identified unwanted plant;
   - performing a vertical movement by at least the root cutter unit in a direction away from the at least partly destructed identified unwanted plant, so that the root cutter unit is arranged above the ground.
36. The computer implemented method according to any one of the preceding items 34-35, comprising cutting grass in a lawn by means of the robotic lawn mower device, and wherein the detection and/or the at least partly destruction of the unwanted plant in the lawn is performed before, during and/or after the grass cutting.
37. The computer implemented method according to any one of the preceding items 34-36, wherein the robotic lawn mower device is the device according to any one of the preceding items.

## Claims

1. A robotic lawn mower device for weed removal, the device comprising
- a body;
- a grass cutting unit arranged on the body for mowing a lawn;
- an imaging unit arranged on the body for acquiring images of plants in the lawn;
- at least one wheel arranged in connection with the body, the at least one wheel configured for moving the device on the lawn; and
- a root cutter unit configured to control an unwanted plant by at least partly destructing the unwanted plant,
wherein the device is configured for 1) identifying an unwanted plant, and 2) determining a position of the unwanted plant, based on image data received from the imaging unit; and arranging the root cutter unit in a vertical axis above the unwanted plant by use of the least one wheel,
wherein the root cutter unit is configured for performing a vertical movement in at least one direction for at least partly destructing the unwanted plant.

2. The robotic lawn mower device according to any of the preceding claims, wherein the vertical movement is supplemented and/or followed by a rotational movement, the vertical and the rotational movements for at least partly destructing the unwanted plant.

3. The robotic lawn mower device according to any one of the preceding claims, configured to identify preselected plant species based on image data received from the imaging unit, to determine whether a plant is unwanted.

4. The robotic lawn mower device according to any one of the preceding claims, wherein the root cutter unit comprises a mechanical device comprising a vertically movable pointing element for performing a vertical movement of at least 5 cm into the ground to destruct a preselected part of a root of the unwanted plant to at least partly destruct the unwanted plant.

5. The robotic lawn mower device according to any of the preceding claims, wherein the root cutter unit is further configured for performing horizontal movement along an axis being perpendicular to a longitudinal axis of the body.

6. The robotic lawn mower device according to any one of the preceding claims, wherein the root cutter unit comprises an actuator to execute the vertical movement.

7. The robotic lawn mower device according to any one of the preceding claims, wherein the imaging unit is arranged on the body by means of a movable holder, wherein a distal end of the movable holder is attached to the imaging unit, and wherein the proximal end of the movable holder is attached to the body, and wherein the movable holder is configured to tilt in any spatial direction to control a detection field of the imaging unit.

8. The robotic lawn mower device according to any of the preceding claims, further comprising support elements arranged in connection with the body for supporting the body on the ground / lawn during operation of the root cutting unit.

9. The robotic lawn mower device according to any of the preceding claims, further comprising a scanning element, such as a LIDAR, on the body, such as on top of the body, detecting an obstacle arranged on/in the lawn, and based on the detected obstacle move the device around the obstacle.

10. The robotic lawn mower device according to any one of the preceding claims, wherein the imaging unit collects data related to the condition of the lawn, types of plants in the surroundings of the device, and to animals in the surroundings of the device.

11. The robotic lawn mower device according to any one of the preceding claims, wherein the device is configured to synergistically operate the grass-cutting unit, the imaging unit and the root cutter unit, such that information detected by the imaging unit is utilized for the operation of the grass-cutting unit and of the root cutter unit.

12. The robotic lawn mower device according to any of the preceding claims, configured to navigate on a tiled surface, such as concrete tiles, detect and/or identify unwanted plants present in tile separations and control said unwanted plants by means of the root cutter unit.

13. A computer implemented method for operating a robotic lawn mower device, the method comprising
- providing a robotic lawn mower device,
- cutting grass in a lawn by means of the robotic lawn mower device,
- detecting a plant in the lawn using the device;
- identify if the detected plant in the lawn is an unwanted plant;
- if the detected plant is a unwanted plant, then
- determining a plant position, and preferably determining a current position of the device;
- moving the device to the determined plant position;
- arranging the device in a preselected destruction position;
- destructing at least partly the unwanted plant using the device
wherein the detection and/or the at least partly destruction of the unwanted plant in the lawn is performed before, during and/or after the grass cutting the device being configured for controlling unwanted plants by at least partly destructing the unwanted plant;.

14. The computer implemented method according to claim 13, wherein the step of destructing further comprising:
- performing a vertical movement by at least a root cutter unit of the device in a direction, preferably a vertical direction, towards the unwanted plant, so that the root cutter unit of the device at least partly is arranged in the ground within the identified unwanted plant;
- performing a rotational movement by the root cutter unit arranged at least partly in the ground, preferably to at least partly destruct root connections to the identified unwanted plant; and
- performing a vertical movement by at least the root cutter unit in a direction away from the at least partly destructed identified unwanted plant, so that the root cutter unit is arranged above the ground.

15. The computer implemented method according to any one of the preceding claims 13-14, wherein the robotic lawn mower device is the device according to any one of the preceding claims 1-12.
